# FASCICULE DE BREVET EUROPEEN

(11) **EP 4 147 817 B1**
(45) Date de publication et mention de la délivrance du brevet: **18.11.2026**
(21) Numéro de dépôt: 22194802.9
(22) Date de dépôt: 09.09.2022
(51) Int. Cl.: B23P 11/00, B23P 11/02, B60B 27/00, F16C 43/04, F16C 35/063, F16C 33/58, F16C 19/18

(54) **PROCEDE D'ASSEMBLAGE D'AU MOINS UNE BAGUE COOPERANT PAR FRETTAGE AVEC UNE PORTEE DE FRETTAGE D'UNE PIECE**
VERFAHREN ZUM ZUSAMMENBAU VON MINDESTENS EINEM RING, DER DURCH SCHRUMPFUNG MIT EINEM SCHRUMPFFUTTER EINES TEILS ZUSAMMENWIRKT
METHOD FOR ASSEMBLING AT LEAST ONE RING ENGAGING BY BRACING, WITH A MOUNTING FOR BRACING OF A PART

(30) Priorité: 10.09.2021 FR 2109513
(43) Date de publication de la demande: 15.03.2023
(73) Titulaire: NTN Europe, 74000 Annecy (FR)
(72) Inventeur: AZAM, Guy, 73420 DRUMETAZ CLARAFOND (FR); CAPELLI, Yvan, 74010 ANNECY (FR); FORRAT, Gilles, 74010 ANNECY (FR); GRANGIER, Julien, 74000 ANNECY (FR); THEAU, Eric, 74000 ANNECY (FR)
(74) Mandataire: Alatis

(56) Documents cités:
- EP-A1- 2 915 683
- JP-A- 2008 002 524
- JP-A- 2009 030 618
- JP-A- 2010 133 482
- US-A1- 2006 112 562
- US-B2- 7 707 724

## Description

### DOMAINE TECHNIQUE DE L'INVENTION

L'invention concerne, de façon générale, le domaine technique de l'assemblage de pièces mécaniques.

L'invention se rapporte plus spécifiquement à l'assemblage d'une pièce telle qu'un moyeu de roue motrice d'un véhicule sur un bol de transmission.

### ÉTAT DE LA TECHNIQUE ANTÉRIEURE

Généralement, la mise en rotation d'un moyeu ou d'une fusée de roue de véhicule se fait par l'intermédiaire d'un roulement. La plupart du temps, ce roulement comprend une bague extérieure, deux rangées de corps roulants et au moins une bague intérieure emmanchée sur le moyeu de telle sorte que cette bague intérieure vienne en butée axiale contre un épaulement d'une portée du moyeu.

Les corps roulants d'une rangée roulent sur un des chemins de la bague extérieure et le chemin de la bague intérieure. Ceux de l'autre rangée roulent sur l'autre chemin de la bague extérieur et le chemin du moyeu ou d'une seconde bague intérieure. La ou les bagues dite(s) bague(s) intérieure(s) est(sont) emmanchées sur le moyeu.

Quelle que soit la configuration, la ou les bague(s) intérieure(s) est(sont) immobilisée(s) radialement par emmanchement sur le moyeu. Par ailleurs, le roulement est immobilisé axialement dans une direction par son appui contre l'épaulement du moyeu et axialement dans l'autre direction par une collerette annulaire formée par déformation plastique d'une partie du moyeu sur lequel est montée la bague intérieure à maintenir, ou éventuellement par le bol de transmission. Cette collerette, ou ce bol de transmission, présente une face de rétention appliquée en pression sur la face supérieure de la bague, de manière à immobiliser axialement la bague, en poussée axiale contre l'épaulement d'une portée du moyeu. Une fois la collerette formée, ou la transmission serrée, l'ensemble est prêt à l'emploi puisque le maintien axial de la, ou les deux, bague(s) intérieure(s) est assuré par la collerette ou le bol de transmission.

Le moyeu de roue est constitué d'une pièce définissant un axe géométrique de rotation et présentant une cavité axiale pourvue de cannelures sur une paroi interne à des fins de transmission de couple. En effet, ces cannelures permettent de réaliser l'accouplement avec le bol de transmission et ainsi d'assurer la fonction de passage du couple jusqu'aux roues.

La cavité axiale du moyeu est ouverte à une extrémité où se trouve le dispositif de rétention de la bague intérieure, cette même ouverture étant configurée pour permettre l'entrée d'un axe cannelé du bol de transmission venant coopérer avec les cannelures intérieures de la cavité axiale du moyeu lorsque le bol de transmission est assemblé avec le moyeu.

Une opération de brochage pour obtenir les cannelures peut être réalisée sur le moyeu seul, avant assemblage du roulement. C'est le cas par exemple dans la solution décrite dans le brevet US 7,707,724 B2. Mais dans ce cas, le fait d'assembler le roulement après réalisation des cannelures a pour effet de rétreindre les cannelures et de détériorer la précision géométrique, notamment la rectitude, de ces cannelures. Ceci quand bien même une opération de contrainte de la zone frettée est réalisée pendant l'opération de brochage.

Une solution possible pour s'affranchir de ce problème pourrait consister à réaliser un brochage après assemblage final du roulement, mais cette opération est contraignante en termes de procédé de fabrication puisqu'elle impose d'employer un moyen de brochage à un stade de la gamme de fabrication ou les causes de surcouts sont très généralement plus nombreuses.

Le document JP 2010 133482 A décrit un procédé d'assemblage connu de l'art antérieur.

### EXPOSE DE L'INVENTION

L'invention vise à remédier à tout ou partie des inconvénients de l'état de la technique en proposant notamment un procédé de fabrication d'un assemblage d'au moins une bague de roulement sur un moyeu de roue motrice permettant de limiter toute détérioration de la rectitude des cannelures après le formage de sorte à garantir une parfaite transmission du couple entre le bol de transmission et le moyeu de roue, et d'assurer un montage aisé de ces deux organes entre eux.

Pour ce faire est proposé, selon un premier aspect de l'invention, un procédé d'assemblage d'au moins une bague coopérant par frettage avec une portée de frettage d'une pièce définissant un axe de référence et présentant une cavité axiale traversante, la portée de frettage étant tournée radialement à l'opposé de l'axe de référence, la pièce présentant une extrémité supérieure libre et une paroi intérieure s'étendant autour de l'axe de référence tournée radialement vers l'axe de référence et s'étendant axialement en délimitant une partie au moins de la cavité axiale, de préférence de manière à présenter un recouvrement axial au moins partiel avec la portée de frettage, le procédé d'assemblage comportant :
- une étape de formation, sur la paroi intérieure, de cannelures s'étendant axialement ;
- une étape de frettage de la bague sur la portée de frettage de la pièce de sorte qu'une face transversale inférieure de la bague vienne en butée contre un épaulement de la pièce ;
le procédé d'assemblage étant remarquable en ce qu'il comporte, postérieurement à l'étape de formation des cannelures et préalablement à l'étape de frettage de la bague sur la portée de frettage de la pièce, une étape d'expansion élasto-plastique radiale d'une portion supérieure de la pièce, dont il résulte un évasement et de la portée de frettage et d'une portion des cannelures, suivie le cas échéant d'une étape d'usinage de la portée de frettage, le frettage ultérieur de la bague sur la portée de frettage engendrant une déformation de la portion supérieure telle que ladite portion des cannelures se rapproche de l'axe de référence.

On entend par une expansion « élasto-plastique » une expansion qui évolue en premier lieu comme une déformation élastique puis en second lieu plastique. De cette manière, une fois l'expansion élasto-plastique radiale de la portion supérieure de la pièce réalisée, la pièce ne reprend pas sa forme initiale et conserve un évasement à la fois de la portée de frettage et de la portion des cannelures.

Un tel procédé permet de réaliser l'étape d'expansion radiale indépendamment de l'opération de réalisation des cannelures : cela présente comme avantage direct de pouvoir réaliser ce procédé de manière indépendante d'autres étapes pouvant être mises en œuvre par d'autres dispositifs éventuellement ou dans des lieux différents.

Un autre avantage apporté par un tel procédé est la possibilité d'adapter plus fidèlement le besoin d'anticipation du rétreint en ajustant la déformation élasto-plastique nécessaire en fonction du type de roulement, quel que soit le dispositif de maintien axial de la ou des bague(s) intérieure(s) sur la pièce. Cet ajustement de déformation peut être notamment prédéterminé à partir d'essais successifs et tenir compte des effets des différentes étapes ultérieures qui auront une incidence sur la déformation de la portion supérieure

Selon un mode de réalisation, la portion des cannelures comprend, voire est constituée par, une portion en recouvrement axial au moins partiel avec la portée de frettage.

Selon un mode de réalisation, la pièce est monobloc.

Selon un mode de réalisation, la pièce est métallique, de préférence formée à base d'acier, de préférence encore constituée en acier. Un tel matériau est choisi pour ses caractéristiques structurelles ainsi que pour son comportement élasto-plastique.

Selon un mode de réalisation, l'expansion élasto-plastique radiale de la portion supérieure de la pièce déforme au moins une portion cylindrique de la cavité axiale présentant un diamètre nominal pris avant expansion en une portion évasée dont un plus petit diamètre pris après expansion sur la même portion cylindrique est supérieur ou égal au diamètre nominal de ladite portion cylindrique pris avant expansion. Il en résulte une expansion radiale de la portion de la cavité axiale associée qui évolue de façon progressive le long de l'axe de référence. Cet évasement est orienté dans le sens d'une expansion plus grande vers l'extrémité supérieure libre axiale de la portion supérieure prévue pour accueillir la transmission.

Selon un mode de réalisation, durant l'étape d'expansion élasto-plastique radiale de la portion supérieure de la pièce, un contrôle continu de l'expansion est réalisé, l'étape d'expansion élasto-plastique radiale de la portion supérieure de la pièce étant de préférence asservie en fonction des données du contrôle continu réalisé. De cette manière on maîtrise parfaitement l'étape d'expansion élasto-plastique.

Selon un mode de réalisation, l'expansion élasto-plastique radiale de la portion supérieure de la pièce est localisée axialement entre l'épaulement de la portée de la pièce et l'extrémité supérieure libre.

Selon un mode de réalisation, la cavité axiale présente au moins un changement de diamètre intérieur situé axialement entre l'épaulement de la portée cylindrique de la pièce et l'extrémité supérieure libre, et orientée dans le sens d'une diminution d'une épaisseur de la portée cylindrique dirigée vers l'extrémité supérieure libre.

Selon un mode de réalisation, l'étape d'expansion élasto-plastique radiale comporte l'utilisation d'un outil d'expansion radiale, notamment de conversion de déplacement axial en déplacement d'expansion radiale, de préférence une étape de mise en place d'une pluralité de segments d'expansion à travers l'extrémité supérieure libre et répartis autour d'un cône d'expansion et une étape d'application d'un effort axial sur le cône d'expansion. Bien entendu d'autres méthodes d'expansion élasto-plastique peuvent être employées, par exemple : par appui direct (effort axial) d'un outil d'expansion de forme (par exemple cône) sur la zone à évaser ; par introduction d'un outillage mettant en œuvre un fluide sous pression pour réaliser la dilatation d'un outillage d'expansion ; ou toute autre méthode permettant d'assurer la déformation visée.

Selon un mode de réalisation, l'étape de formation de cannelures ouvertes sur la paroi intérieure est une étape de brochage.

Selon un mode de réalisation, la paroi intérieure est une paroi intérieure de révolution.

Selon un mode de réalisation, le procédé d'assemblage comporte, après l'étape de frettage de la bague, une étape de formation d'une collerette annulaire à partir de l'extrémité supérieure libre de la pièce, la collerette annulaire présentant une face de rétention appliquée sur la face transversale supérieure de la bague, de manière à immobiliser axialement la bague, en appui axial contre l'épaulement de la portée de la pièce. Bien entendu, d'autre modes d'assemblage alternatifs ou complémentaires de la bague sont possibles. Par exemple, on peut prévoir une transmission vissée qui viendrait en appui contre la bague à la place de la collerette annulaire.

Selon un mode de réalisation, l'étape de formation de la collerette annulaire a pour effet une déformation locale de la portion supérieure telle que la portion des cannelures, par exemple en recouvrement avec la portée de frettage, se rapproche de l'axe de référence. Dans une telle configuration, l'étape d'expansion élasto-plastique radiale de la portion supérieure de la pièce est configurée de sorte à tenir compte de cette étape de déformation de la portion supérieure en plus de l'étape de frettage ultérieur de la bague sur la portée de frettage de sorte à ce que, une fois le procédé d'assemblage terminé, les cannelures soient les plus rectilignes possibles malgré les déformations subies à travers les différentes étapes du procédé d'assemblage mises en œuvre.

Selon un mode de réalisation, l'étape de formation de la collerette annulaire comprend une étape de sertissage, de préférence une étape de sertissage orbital. Cette étape de sertissage orbital est également parfois nommée « bouterollage ». Dans ce cas, l'étape de frettage de la bague sur la portée de frettage de la pièce est configurée de sorte que la face transversale inférieure de la bague vienne en butée contre un épaulement de la pièce mais également que l'extrémité supérieure libre de la pièce dépasse axialement d'une face transversale supérieure de la bague. La collerette annulaire peut ainsi être formée à partir de cette partie dépassante de l'extrémité supérieure libre de la pièce.

Selon un mode de réalisation, l'étape d'expansion élasto-plastique radiale de la portion supérieure de la pièce est configurée de sorte à obtenir un évasement prédéterminé et de la portée de frettage et de la portion des cannelures, par exemple en recouvrement avec la portée de frettage. Cet évasement est prédéterminé en fonction des étapes ultérieures tendant à déformer localement la portion supérieure telle que la portion des cannelures, par exemple en recouvrement avec la portée de frettage, dans le sens d'un rapprochement de l'axe de référence, et afin d'obtenir un assemblage dont les cannelures sont le plus possible rectilignes.

Selon un mode de réalisation, la bague est une bague intérieure d'un roulement et la pièce est un moyeu, de préférence un moyeu de roue motrice.

Est en outre décrit une pièce, notamment un moyeu de roue motrice de véhicule automobile, destinée à être assemblée avec au moins une bague selon le procédé d'assemblage tel que décrit ci-avant, la pièce comportant une portée de frettage définissant un axe de référence et présentant une cavité axiale traversante, la portée de frettage étant configurée pour recevoir au moins une bague frettée et étant tournée radialement à l'opposé de l'axe de référence, la pièce présentant une extrémité supérieure libre et une paroi intérieure s'étendant autour de l'axe de référence tournée radialement vers l'axe de référence et s'étendant axialement en délimitant une partie au moins de la cavité axiale, la pièce comportant des cannelures s'étendant axialement sur la paroi intérieure, la pièce étant remarquable en ce qu'elle comporte une portion supérieure expansée radialement et de façon élasto-plastique, munie d'un évasement et de la portée de frettage et de la portion des cannelures.

Est en outre décrit un ensemble, tel qu'un kit, comportant une pièce telle que décrite ci-avant, notamment un moyeu de roue motrice de véhicule automobile, et au moins une bague configurée pour coopérer par frettage avec une portée de frettage de la pièce l'ensemble étant remarquable en ce que qu'il est configuré de sorte que dans une position assemblée, la bague est frettée sur la portée de frettage de la pièce de sorte qu'une face transversale inférieure de la bague vient en butée contre un épaulement de la pièce, le frettage de la bague sur la portée de frettage engendrant une déformation de la portion supérieure telle que la portion des cannelures se rapproche de l'axe de référence.

Selon un autre aspect de l'invention, celle-ci a trait à un assemblage d'une pièce et d'une bague frettée sur une portée de frettage de la pièce, l'assemblage étant caractérisé en ce qu'il est obtenu directement par le procédé tel que décrit ci-avant.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en coupe d'un moyeu de roue motrice selon un mode de réalisation, avant une étape de brochage ;
[Fig. 2] : une vue en coupe du moyeu de la figure 1, pendant une étape de brochage ;
[Fig. 3] : une vue en coupe du moyeu de la figure 2, après l'étape de réalisation des cannelures ;
[Fig. 4] : une vue en coupe du moyeu de la figure 3 muni d'une bague intérieure de roulement frettée ;
[Fig. 5] : une vue en coupe du moyeu de la figure 4 après une étape de sertissage ;
[Fig. 6A] : une vue en coupe d'une portion cannelée du moyeu de la figure 5 ;
[Fig. 6B] : une vue d'un graphique illustrant des courbes des impacts dimensionnels des étapes de brochage, frettage et sertissage sur la portion cannelée du moyeu si aucune étape d'expansion élasto-plastique radiale n'est mise en œuvre durant le procédé d'assemblage ;
[Fig. 7] : une vue en coupe du moyeu de la figure 3 équipé d'un outil d'expansion ;
[Fig. 8] : une vue isométrique de la figure 7 ;
[Fig. 9] : une vue en coupe du moyeu de la figure 7 ou 8 durant une étape d'expansion radiale du moyeu ;
[Fig. 10] : une vue en coupe du moyeu expansé après l'étape d'expansion radiale du moyeu de la figure 9 ;
[Fig. 11A] : une vue en coupe d'une portion cannelée du moyeu de la figure 5 ;
[Fig. 11B] : une vue d'un graphe illustrant des courbes des impacts dimensionnels des étapes de brochage, frettage et sertissage sur la portion cannelée du moyeu, si une étape d'expansion élasto-plastique radiale est mise en œuvre durant le procédé d'assemblage, avant les étapes de frettage et sertissage.

Pour plus de clarté, les éléments identiques ou similaires sont repérés par des signes de référence identiques sur l'ensemble des figures.

### DESCRIPTION DÉTAILLÉE D'UN MODE DE RÉALISATION

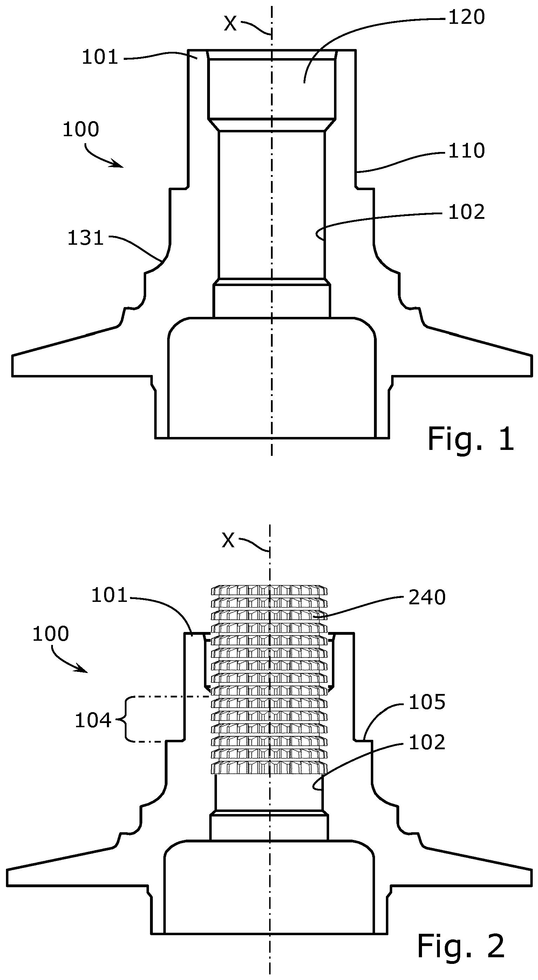

Sur les figures 1 à 5 est illustré en coupe longitudinale d'une pièce **100** formant moyeu de roue motrice d'un véhicule automobile durant différentes étapes d'un procédé d'assemblage d'une bague **10** sur ce moyeu **100,** la bague étant une bague **10** intérieure d'un roulement.

Sur ces figures, comme les autres figures, seule la bague **10** intérieure du roulement est illustrée. De manière générale, l'assemblage **1** de la bague **10** intérieure et du moyeu **100** appartient à un ensemble tournant destiné à être guidé en rotation autour d'un axe géométrique de rotation **X** par rapport à un organe de suspension (non représenté) à l'aide du roulement.

Un tel roulement est généralement constitué dans l'exemple d'une bague extérieure à deux chemins de roulement extérieurs, d'un premier chemin de roulement intérieur **131** directement formé sur la pièce constitutive du moyeu **100,** et d'un deuxième chemin de roulement intérieur **132** formé sur la bague intérieure **10** de roulement emmanchée sur une portée cylindrique **110** du moyeu **100,** des corps roulants (non illustrés) en deux rangées, par exemple des billes, étant interposés entre les chemins de roulement. La bague extérieure comporte généralement un flasque de fixation pourvu d'une interface de fixation à l'organe de suspension, comportant par exemple des trous pour insérer des vis de fixation à l'organe de suspension.

La pièce **100** définit un axe de référence **X** et présente une cavité axiale **120** traversante. La portée de frettage **110,** ici cylindrique, sur laquelle est frettée la bague **10** est tournée radialement à l'opposé de l'axe de référence **X.** Une paroi intérieure **102** radialement opposée à la portée de frettage **110,** est tournée radialement vers l'axe de référence **X** et s'étend autour de l'axe de référence **X** et axialement le long de cet axe **X** de sorte à présenter un recouvrement axial au moins partiel avec la portée de frettage **110.**

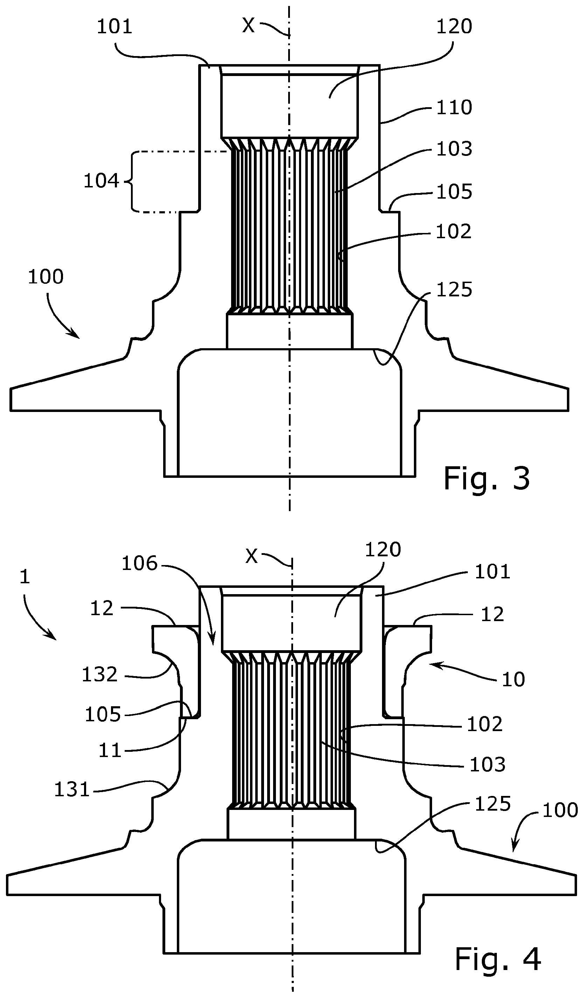

Le moyeu **100** est destiné à être entraîné en rotation par un organe de sortie de chaîne cinématique de transmission, constitué notamment par un bol de joint de transmission (non illustré), qui peut être homocinétique ou quasi-homocinétique. La pièce constituant le bol est pourvue d'un tronçon d'arbre cannelé prévu pour venir s'insérer dans la cavité axiale **120** de forme conjuguée pratiquée dans le moyeu **100,** en particulier dans des cannelures **103** s'étendant axialement sur la paroi intérieure **102** de la cavité axiale **120** (voir la figure 3 [Fig.3]).

Comme illustré sur la figure 2 ([Fig.2]) une étape de formation, sur la paroi intérieure **102,** de cannelures **103** axiales est réalisée. En particulier ici, l'étape de formation de cannelures **103** ouvertes sur la paroi intérieure **102** de révolution est une étape de brochage. Durant cette opération, on vient insérer en force un outil de brochage **240** cannelé dans la cavité axiale **120** contribuant à un usinage par brochage de cette dernière. Les copeaux générés par la pénétration en force de l'outil de brochage **240** dans la cavité **120** sont évacués sans difficulté par une ouverture large à une extrémité inférieure de la cavité **120,** opposée axialement à une extrémité supérieure **101** libre délimitant une ouverture ouverte axialement et permettant l'accès à l'outil de brochage **240.** La notion d'extrémité « inférieure » ou « supérieure » de la pièce **101** ne fait pas référence à la position finale de l'assemblage, mais à l'orientation de la pièce durant le procédé d'assemblage préférentiel décrit ici. Bien entendu, le procédé d'assemblage peut être mis en œuvre suivant une autre orientation sans dénaturer l'invention, ces caractéristiques « inférieure » ou « supérieure » permettant de distinguer les deux extrémités l'une de l'autre et ayant été choisi selon l'orientation retenue sur les figures. De même la notion d'extrémité supérieure dite « libre » est donnée avant assemblage, quand bien même elle vient à être usinée a posteriori par exemple pour subir une étape de sertissage et ainsi former une collerette comme décrit ci-après.

L'outil de brochage **240** comporte une broche, par exemple en acier, munie d'une série de dents dont la section correspond au profil à exécuter. La longueur de la broche est définie par le nombre de dents, lui-même défini par la quantité de matière à enlever. En général, chaque dent enlève une épaisseur de métal variant de 0,03 à 0,01 mm suivant sa forme et sa section précise.

Le moyeu **100** est configuré de sorte que les cannelures **103** présentent une portion **104,** laquelle est ici en recouvrement axial au moins partiel avec la portée de frettage **110** (voir la figure 3 [Fig.3]). Une fois les cannelures **103** réalisées, le moyeu **100** comporte donc une portion **104** s'étendant axialement suivant laquelle une portion correspondante des cannelures **103** est superposées radialement avec une portion correspondante de la portée de frettage **110.**

La figure 4 ([Fig.4]) illustre une étape de frettage de la bague **10** sur la portée de frettage **110** de la pièce **100** de sorte qu'une face transversale inférieure **11** de la bague **10** vient en butée contre un épaulement **105** de la pièce **100.** Une fois le frettage de la bague **10** intérieure du roulement effectué, l'extrémité supérieure **101** libre de la pièce **100** est ici saillante axialement par rapport à une face transversale supérieure **12** de la bague **10,** la face transversale supérieure **12** étant opposée axialement à la face transversale inférieure **11** par rapport à la bague **10.**

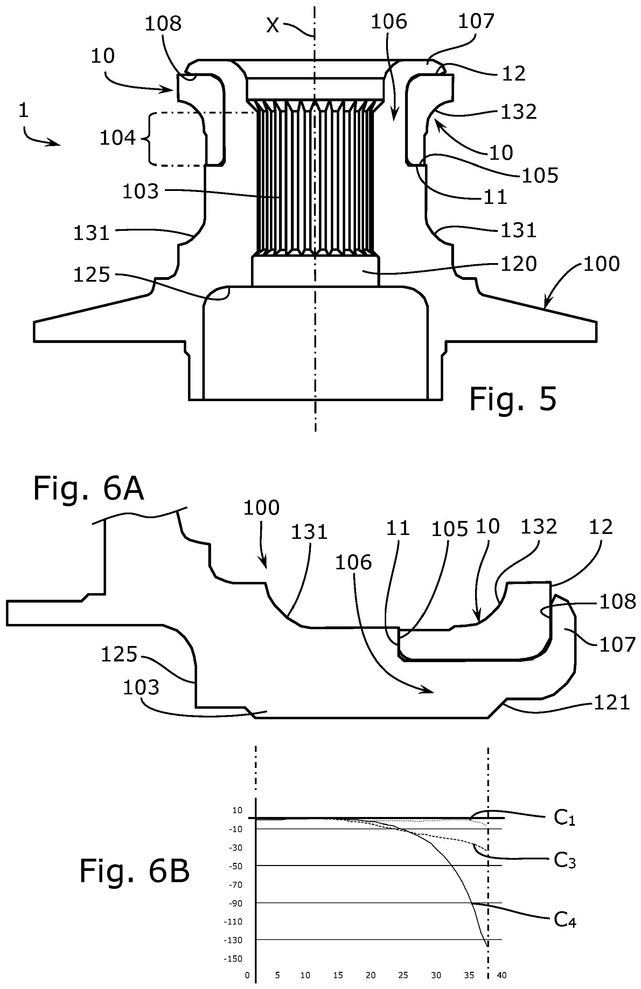

Sur la figure 5 ([Fig.5]), on observe qu'une extrémité annulaire axiale supérieure **101** du moyeu **100** a été rabattue radialement vers l'extérieur et de préférence axialement vers la bague **10** intérieure après emmanchement, en particulier après frettage, de la bague **10** intérieure. Cette figure 5 ([Fig.5]) illustre l'assemblage **1** résultant d'une étape ultérieure à l'étape de frettage de la bague **10,** à savoir une étape de formation d'une collerette **107** annulaire à partir de l'extrémité supérieure **101** libre de la pièce **100.** La collerette **107** annulaire ainsi formée présente une face de rétention **108** appliquée sur la face transversale supérieure **12** de la bague **10,** de manière à immobiliser axialement la bague **10,** en appui axial contre l'épaulement **105** de la portée **110** de la pièce **100** d'un côté et en appui contre la collerette **107** de l'autre côté axialement.

Cette étape de formation de la collerette **107** annulaire est réalisée par déformation de matière, de préférence à l'aide d'une bouterolle, le cas échéant après chauffage local de la partie ainsi déformée formant la collerette **107.** Il s'agit en particulier ici d'une étape de sertissage, notamment de sertissage orbital.

L'opération de frettage de la bague **10** sur la portée de frettage **110** de la pièce **100,** comme celle de sertissage orbital pour former la collerette **107** ont ceci en commun qu'elles ont pour effet d'engendrer chacune une déformation de la portion supérieure **106,** comprenant en particulier la portion **104** des cannelures **103** ici en recouvrement avec la portée de frettage **110,** cette déformation étant orientée dans le sens d'un rapprochement de la portion supérieure **106** de l'axe de référence **X.** En d'autres termes, l'opération de frettage de la bague **10** engendre un rétreint de la portion supérieure **106.** En cas de sertissage orbital, cette opération accroît généralement ce rétreint. Cette conséquence est particulièrement visible sur la figure 6B ([Fig. 6B]) qui illustre un graphique sur lequel sont représentées des courbes des impacts dimensionnels des étapes de brochage **C1,** frettage **C3** et sertissage orbital **C4** prises successivement sur la portion cannelée **103** du moyeu **100,** ces courbes étant présentées en perspective avec la figure 6A ([Fig. 6A]) qui illustre une vue en coupe plus détaillée de la portion cannelée **103** du moyeu **100.** Le graphique possède comme abscisse une donnée de position axiale de la portion cannelée **103** du moyeu **100** en millimètres et en ordonnées la mesure de l'écart de diamètre en microns.

L'assemblage **1** obtenu est prévu pour recevoir dans la cavité axiale **120** un tronçon d'arbre cannelé du bol de joint de transmission. Cette coopération de cet arbre cannelé dans la cavité axiale cannelée correspondante permet de s'opposer à une rotation relative des deux pièces et ainsi permettre la transmission du couple durant l'utilisation du véhicule.

En complément, le moyeu **100** est configuré pour participer également au blocage axial du bol. La cavité axiale **120** est notamment dimensionnée pour être traversée par une pièce constitutive du bol munie d'une extrémité filetée ou taraudée pour accueillir un corps taraudé ou fileté d'une vis ou d'un écrou, la vis présentant une tête venant se plaquer contre une rondelle qui vient en appui contre une surface annulaire **125** du moyeu **100,** formant une couronne circulaire entourant à son extrémité inférieure la cavité axiale **120.** Du côté axialement opposé de la cavité axiale **120** une face annulaire du bol vient en appui contre une face correspondante du moyeu **100** constituée par la collerette **107.**

Conformément à l'invention, postérieurement à l'étape de formation des cannelures **103** et préalablement à l'étape de frettage de la bague **10** sur la portée de frettage **110** de la pièce **100,** une étape d'expansion élasto-plastique radiale d'une portion supérieure **106** de la pièce **100** est réalisée.

Une telle opération permet de créer un évasement de la portion supérieure **106** du moyeu **100,** et en particulier à la fois de la portée de frettage **110** et de la portion **104** des cannelures **103,** notamment en recouvrement avec la portée de frettage **110.**

L'expansion radiale résultante maximale est localisée au niveau de l'extrémité supérieure **101** libre. Dans cet exemple, l'expansion radiale maximale mesurée au droit de l'extrémité supérieure **101** peut atteindre, voire dépasser, 200 microns. L'expansion radiale nécessaire est prédéterminée et liée à la déformation observée lors des étapes de brochage, de frettage.

Cette étape d'expansion élasto-plastique est suivie d'une étape d'usinage, voire de rectification de la portée de frettage **110** préalablement à l'étape de frettage. Le frettage ultérieur de la bague **10** sur la portée de frettage **110** participe, au moins en partie à engendrer une déformation de la portion supérieure **106** telle que la portion **104** des cannelures **103** ici en recouvrement avec la portée de frettage **110** se rapproche de l'axe de référence **X.** Lorsqu'aucune étape de sertissage n'est prévue ensuite, alors l'étape de frettage peut constituer la seule étape de déformation en rapprochement vers l'axe de référence **X.** Toutefois, lorsqu'une étape de sertissage est également prévue après le frettage de la bague **10,** l'étape d'expansion élasto-plastique radiale est configurée de sorte à tenir compte de la déformation en rapprochement vers l'axe de référence **X** apportée ultérieurement par cette étape de formation de la collerette **107.**

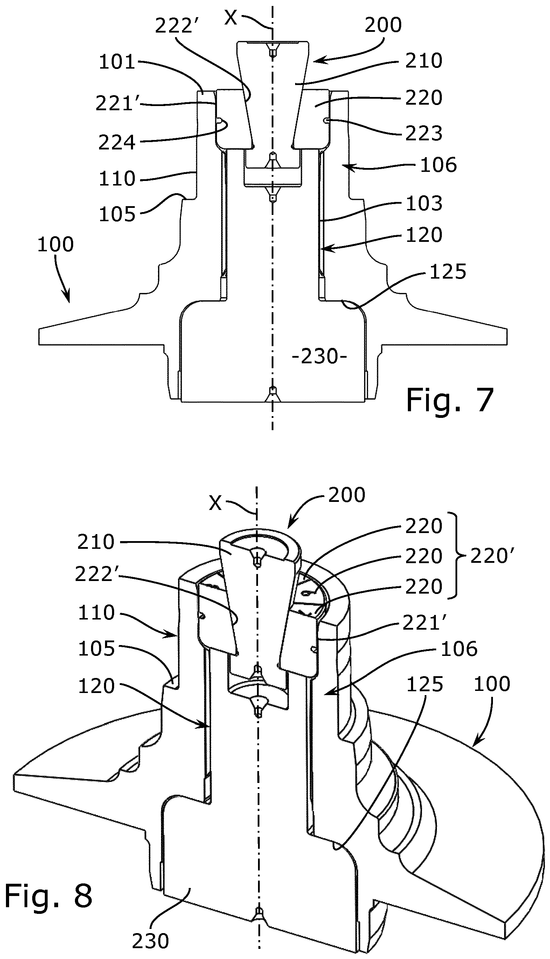

La figure 7 ([Fig.7]) et figure 8 ([Fig.8]) illustrent toutes les deux des vues en coupe dont l'une en perspective isométrique, du moyeu **100** durant une telle étape d'expansion élasto-plastique radiale de la portion supérieure **106** de la pièce **100** par l'intermédiaire d'un outil d'expansion **200.** Cet outil d'expansion **200** est configuré pour convertir un déplacement axial en déplacement radial. L'outil d'expansion **200** se compose notamment d'un support **230,** d'une pluralité de segments **220** d'expansion à travers l'extrémité supérieure **101** libre et répartis autour d'un cône d'expansion **210** grâce auquel on peut appliquer un effort axial sur le cône d'expansion **210** qui lui-même applique un effort sur les segments **220** d'expansion. L'ensemble des segments **220** d'expansion est configuré de manière à former un ensemble annulaire comprenant les segments **220** d'expansion répartis autour du cône d'expansion **210.**

La portion supérieure **106** de la pièce **100** présente une surface de contact intérieure cylindrique portée par la cavité axiale **120** coaxiale par rapport à l'axe de référence **X** et orientée du côté de l'axe de référence **X.** Cette surface de contact radiale intérieure est située axialement entre une extrémité supérieure des cannelures **103** de la portion cannelée et l'extrémité supérieure libre **101.** La transition axiale entre l'extrémité supérieure des cannelures **103** de la portion cannelée et la surface de contact intérieure est marquée par un changement de diamètre intérieur **121** s'étendant de façon globalement annulaire, discontinue ou continue. Ce changement de diamètre intérieur **121** est par ailleurs situé axialement entre l'épaulement **105** de la portée **110** cylindrique de la pièce **100** et l'extrémité supérieure **101** libre, le changement de diamètre intérieur **121** étant orienté dans le sens d'une diminution d'une épaisseur de la paroi du moyeu **100** dirigée vers l'extrémité supérieure **101** libre.

Le support **230** vient quant à lui se placer à travers la cavité axiale du moyeu par une partie inférieure du moyeu **100,** opposée axialement à la portion supérieure **106.** Une base élargie radialement de ce support **230** est dimensionnée de sorte à venir en appui axial contre la surface annulaire **125** du moyeu **100** en position d'expansion. Le support **230** comporte également un arbre pour s'insérer dans la cavité axiale **120.** Une portion supérieure de cet arbre présente une interface de butée permettant d'assurer une butée de fin de course d'une course axiale des segments **220** d'expansion répartis autour du cône d'expansion **210** durant l'opération d'expansion.

Le support **230** présente un évidement ouvert axialement à son extrémité distale du côté du cône d'expansion **210.** Cet évidement axial permet de garantir la course axiale du cône d'expansion **210.**

Pour la mise en œuvre de l'opération d'expansion élasto-plastique radiale de la portion supérieure **106** de la pièce **100,** le support **230** est inséré dans la cavité axiale par la partie inférieure du moyeu **100** positionné verticalement jusqu'à venir en butée axiale contre le moyeu **100,** en particulier par l'intermédiaire de sa base élargie qui vient en appui contre la surface annulaire **125** du moyeu **100** de dimension radiale supérieure celle de la cavité axiale **120.**

Les segments **220** d'expansion sont ensuite placés dans la portion supérieure **106** à travers l'extrémité supérieure **101** libre, chaque segment **220** d'expansion étant positionné de sorte à venir, d'une part, radialement en contact et en appui contre une partie de la surface de contact radiale cylindrique de la portion supérieure **106** portée par la cavité axiale **120,** et d'autre part, axialement en appui contre une surface d'appui de l'extrémité distale du support **230.** Les segments **220** d'expansion disposés forment un ensemble annulaire **220'** dans lequel un segment **220** pris seul correspond à une portion de cet ensemble annulaire sur un secteur angulaire prédéterminé. Cet ensemble annulaire **220'** présente une surface radiale extérieure **221'** formée par la série circonférentielle des surfaces extérieures individuelles des segments **220** et une surface radialement intérieure **222'** délimitant un espace pour accueillir le cône d'expansion **210.** Cette surface intérieure s'étend de sorte à former une surface de révolution autour de l'axe de référence **X** tronconique dans le sens d'une diminution de son diamètre vers l'intérieur de la cavité axiale **120,** cette surface intérieure étant formée par la série circonférentielle globalement continue des surfaces intérieures individuelles des segments **220** suivant un secteur angulaire associé.

Dans ce procédé en particulier, au moins dans cette opération d'expansion radiale, le moyeu **100** est de préférence orienté de sorte que son axe de référence **X** est placé verticalement, la portion supérieure **106** de la pièce **100** étant dressée verticalement vers le haut. Une telle configuration facilite et simplifie la mise en œuvre du procédé en limitant les outils employés et en utilisant habilement les forces de pesanteur pour assurer la stabilité, notamment de la pièce **100** et du support **230.**

Comme visible sur la figure 7 ([Fig.7]) et figure 8 ([Fig.8]), au moins un ressort **223** est disposé annulairement de sorte à entourer radialement l'ensemble des segments **220.** Au moins une gorge **224** circulaire pourra être prévue à cet effet en entourant la surface radiale extérieure **221'** portée par l'ensemble de segments **220.** Un tel ressort **223** vise à maintenir une unité de l'ensemble des segments **220** en les contraignant radialement vers l'intérieur, soit vers l'axe de référence **X** en position d'assemblage. Ceci facilite notamment la manipulation des segments **220** notamment lors de leur placement dans la portion supérieure **106** de la cavité axiale **120** à travers l'extrémité supérieure **101** libre.

On utilise le cône d'expansion **210,** qui présente en réalité une forme extérieure globalement tronconique complémentaire de la forme délimitée par la surface radialement intérieure **222'** de l'ensemble annulaire **220'** pour venir appliquer un effort axial sur la surface intérieure **222'.** Le glissement des deux surfaces tronconiques engendre une force sur l'ensemble annulaire **220'** présentant une composante axiale et une composante radiale.

On notera que la mise en place du cône d'expansion **210** et des segments **220** peut être concomitante, ceci d'autant plus si l'ensemble annulaire **220'** est, d'une part, maintenu radialement en appui contre le cône d'expansion **210** grâce au ressort annulaire entourant l'ensemble annulaire **220',** et d'autre part, maintenu axialement sur le cône d'expansion **210** grâce à la forme tronconique dans un sens et par un flasque en saillie annulaire par rapport à une petite base du cône d'expansion **210** dans l'autre sens.

La composante axiale de l'effort est reprise par le support **230,** contre la surface d'appui plane délimitant l'extrémité distale du support **230** et contenue dans un plan orthogonal à l'axe de référence **X.** La surface d'appui plane délimitant l'extrémité distale du support **230** est généralement située axialement plus proche de l'extrémité supérieure **101** libre que de l'extrémité supérieure des cannelures **103** de la portion cannelée, et plus généralement du changement de diamètre **121** de sorte à éviter que, au vu de la configuration de l'outil d'expansion **200** et du support **230,** les segments **220** viennent en contact ou en interaction avec les cannelures **103** de la portion cannelée. La résultante axiale des efforts est donc reprise par le support **230.**

L'évidement axial ouvert débouchant sur cette surface d'appui plane et centrée à la fois sur l'extrémité distale du support **230** et sur l'axe de référence **X** permet de garantir une course suffisante et nécessaire du cône d'expansion **210** sans interférer avec ladite surface d'appui plane contre laquelle les segments **220** sont en appui.

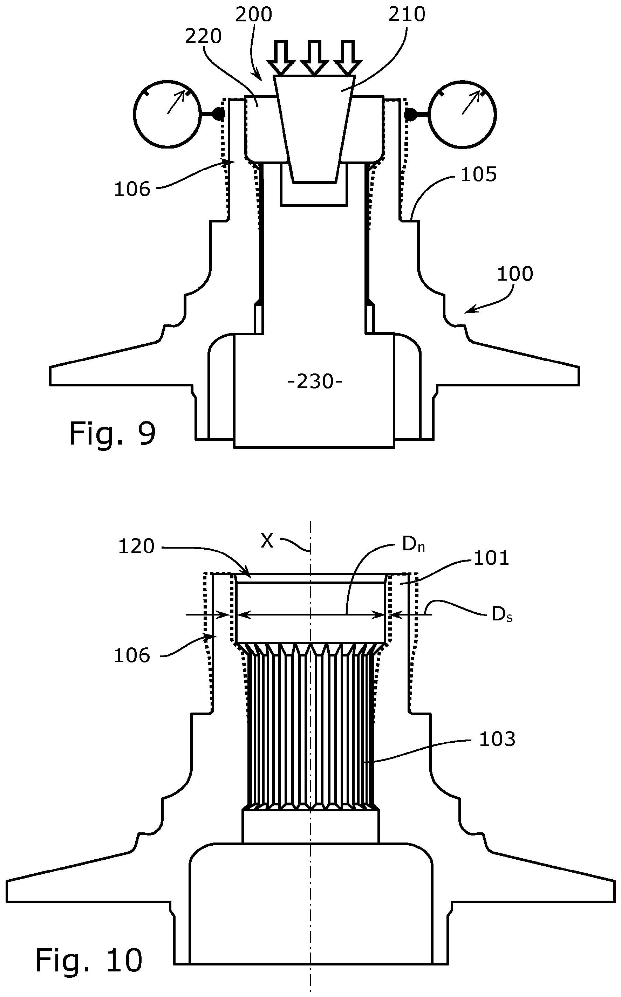

La composante radiale de l'effort est reprise quant à elle par la portion supérieure **106** portée par la cavité axiale **120,** dont il résulte, avec un effort prédéterminé suffisant, un évasement et de la portée de frettage **110** et de la portion **104** des cannelures **103** au moins en recouvrement avec la portée de frettage **110.** Cet évasement est illustré sur la figure 9 ([Fig.9]) et la figure 10 ([Fig.10]) par des lignes en pointillées de la portion supérieure **106** associée et est localisée axialement globalement entre l'épaulement **105** de la portée de frettage **110** de la pièce **100** et l'extrémité supérieure **101** libre.

L'expansion élasto-plastique radiale de la portion supérieure **106** de la pièce **100** déforme ainsi au moins une portion globalement cylindrique de la cavité axiale **120** présentant un diamètre nominal moyen **Dn** pris avant expansion en une portion évasée dont un plus petit diamètre **Ds** pris après expansion sur la même portion cylindrique est supérieur ou égal au diamètre nominal **Dn** de ladite portion cylindrique pris avant expansion.

L'expansion radiale est élasto-plastique, c'est-à-dire qu'elle évolue en premier lieu comme une déformation élastique puis en second lieu comme une déformation plastique, tout en présentant le cas échéant un retour élastique après relâchement de l'effort d'expansion, sans toutefois revenir à sa position d'origine avant expansion. Pour ne pas dégrader le moyeu, cette déformation plastique doit être parfaitement maîtrisée. Comme illustré sur la figure 9 ([Fig.9]), la maîtrise de la déformation est assurée par un contrôle continu de l'expansion réalisé durant l'opération d'expansion radiale de la portion supérieure **106** de la pièce **100,** l'opération d'expansion étant de préférence asservie en fonction des données du contrôle continu réalisé, cet asservissement étant également de préférence continu.

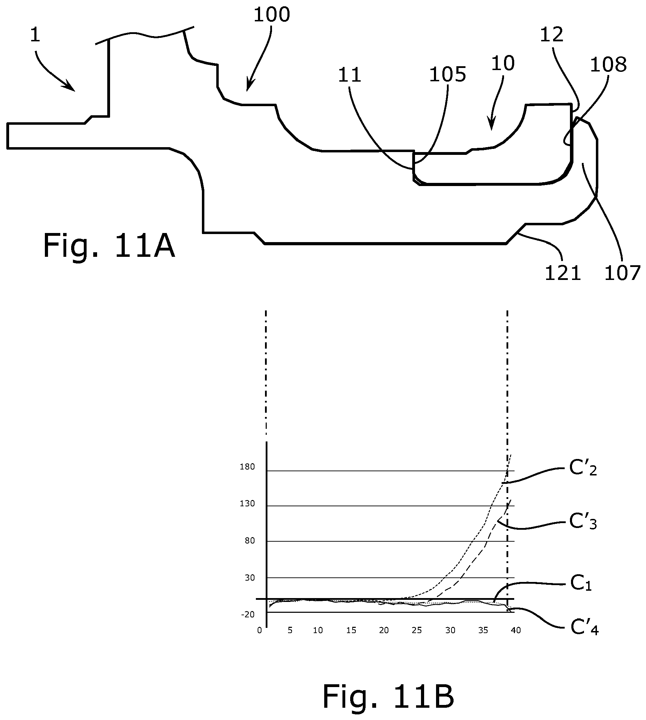

La figure 11B ([Fig.11B]) illustre un graphique sur lequel sont représentées les courbes des impacts dimensionnels des étapes de brochage **C1,** d'expansion **C2',** de frettage **C3'** puis de sertissage orbital **C4'** sur la portion cannelée **103** du moyeu **100,** ces courbes étant présentées en perspective avec la figure 11A ([Fig.11A]) qui illustre une vue en coupe plus détaillée de la portion cannelée **103** du moyeu **100.**

Après l'opération de brochage, l'opération d'expansion est réalisée tendant à évaser la portion supérieure **106.** Les opérations suivantes de frettage et de sertissage tendent quant à elle à déformer la portion supérieure **106** dans le sens d'un rapprochement vers l'axe de référence **X,** en particulier la portée de frettage **110,** permettant de garantir ainsi d'une part la bonne solidarisation de la bague **10** sur la portée de frettage **110** ainsi que, d'autre part, une rectitude des cannelures **103** très proche des cannelures originales, juste après l'opération de brochage. Une opération d'usinage peut être mise en œuvre entre les opérations d'expansion et de frettage, pour permettre le montage de la bague, en particulier lorsque l'expansion aboutit à un diamètre de frettage supérieur au diamètre intérieur de la bague.

En particulier, le graphique montre l'évolution de la rectitude des cannelures au fil des opérations réalisées : la courbe **C1** illustre la rectitude des cannelures **103** obtenue après l'opération de brochage ; la courbe **C2'** illustre la rectitude des cannelures **103** après une opération ultérieure d'expansion élasto-plastique, la courbe **C3'** illustre la rectitude des cannelures **103** après l'opération successive de frettage de la bague **10** intérieure, puis enfin la courbe **C4'** illustre la rectitude finale des cannelures **103** après l'opération de sertissage.

On démontre ainsi l'obtention d'une rectitude proche de la valeur originale (moins de 20µm de défaut) et ainsi l'efficacité du procédé. En effet, le procédé d'assemblage est configuré de sorte que l'écart de diamètre de la cavité axiale **120** pris au droit des cannelures **103** d'une part, avant l'étape d'expansion élasto-plastique radiale de la portion supérieure **106** et, d'autre part, une fois le procédé d'assemblage avec la bague **10** mis en œuvre, dans une configuration où l'assemblage **1** est prêt à être accouplé avec le bol de transmission (après frettage de la bague **10,** et le cas échéant sertissage par exemple), est inférieur à 20µm. Une telle mesure est effectuée par exemple à l'aide d'un système de palpage à billes.

Au moment de procéder au frettage de la bague **10** intérieure sur le moyeu **100,** on dispose d'un assemblage en position désassemblée dans lequel, avant ledit assemblage de la bague **10** avec la pièce **100,** la pièce **100** comporte une portion supérieure **106** expansée radialement et de façon élasto-plastique, munie d'un évasement et de la portée de frettage **110** et de la portion des cannelures **103** en recouvrement avec la portée de frettage **110.**

Dans une position assemblée, la bague **10** est frettée sur la portée de frettage **110** de la pièce **100** de sorte qu'une face transversale inférieure **11** de la bague vient en butée contre un épaulement **105** de la pièce **100** et que l'extrémité supérieure **101** libre de la pièce dépasse axialement d'une face transversale supérieure **12** de la bague **10** pour le mode de réalisation ici décrit, la portée de frettage **110** étant de préférence au moins en partie usinée, en fonction des opérations ultérieures, le frettage au moins de la bague **10** sur la portée de frettage **100** engendrant une déformation élastique de la portion supérieure **106** telle que la portion **104** des cannelures **103** au moins en recouvrement avec la portée de frettage **110** se rapproche de l'axe de référence **X.**

Il est entendu que les opérations d'expansion élasto-plastique et de frettage peuvent être réalisées aisément sur des lieux géographiques différents. Une telle étape d'expansion élasto-plastique est donc aisée à mettre en œuvre et n'impose pas d'employer un moyen de réalisation de cannelures sur le même site de production.

Naturellement, l'invention est décrite dans ce qui précède à titre d'exemple. Il est entendu que l'homme du métier est à même de réaliser différentes variantes de réalisation de l'invention sans pour autant sortir du cadre de l'invention telle que revendiquée.

Par exemple, l'étape de frettage peut comprendre le frettage de plusieurs bagues **10,** par exemple deux bagues **10,** sur la portée de frettage **110** de la pièce **100.** Dans ce cas les bagues **10** sont placées successivement, coaxialement par rapport à l'axe référence **X.** On comprendra qu'une seule de ces bagues **10,** par exemple une première bague présentera une face transversale inférieure **11** qui vienne en butée contre un épaulement **105** de la pièce **100.** Une deuxième bague présente une face transversale inférieure **11** qui peut venir en butée, ou non, contre une face supérieure de la première des bagues **10.**

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens, et que cela reste dans l'étendue de la protection définie par les revendications attachées.

## Revendications

1. Procédé d'assemblage d'au moins une bague (10) coopérant par frettage avec une portée de frettage (110) d'une pièce (100) définissant un axe de référence (X) et présentant une cavité axiale (120) traversante, la portée de frettage (110) étant tournée radialement à l'opposé de l'axe de référence (X), la pièce (100) présentant une extrémité supérieure (101) libre et une paroi intérieure (102) s'étendant autour de l'axe de référence (X) tournée radialement vers l'axe de référence (X) et s'étendant axialement en délimitant une partie au moins de la cavité axiale (120), le procédé d'assemblage comportant :
- une étape de formation, sur la paroi intérieure (102), de cannelures (103) s'étendant axialement ;
- une étape de frettage de la bague (10) sur la portée de frettage (110) de la pièce (100) de sorte qu'une face transversale inférieure (11) de la bague (10) vienne en butée contre un épaulement (105) de la pièce (100) ;
le procédé d'assemblage étant **caractérisé en ce qu'**il comporte, postérieurement à l'étape de formation des cannelures (103) et préalablement à l'étape de frettage de la bague (10) sur la portée de frettage (110) de la pièce (100), une étape d'expansion élasto-plastique radiale d'une portion supérieure (106) de la pièce (100), dont il résulte un évasement et de la portée de frettage (110) et d'une portion (104) des cannelures (103), le frettage ultérieur de la bague (10) sur la portée de frettage (110) engendrant une déformation de la portion supérieure (106) telle que ladite portion (104) des cannelures (103) se rapproche de l'axe de référence (X).

2. Procédé d'assemblage selon la revendication 1, **caractérisé en ce que** la portion (104) des cannelures (103) comprend une portion en recouvrement axial au moins partiel avec la portée de frettage (110).

3. Procédé d'assemblage selon la revendication 1 ou 2, **caractérisé en ce que** l'expansion élasto-plastique radiale de la portion supérieure (106) de la pièce (100) déforme au moins une portion cylindrique de la cavité axiale (120) présentant un diamètre nominal (Dn) pris avant expansion en une portion évasée dont un plus petit diamètre (Ds) pris après expansion sur la même portion cylindrique est supérieur ou égal au diamètre nominal (Dn) de ladite portion cylindrique pris avant expansion.

4. Procédé d'assemblage selon l'une quelconque des revendications précédentes, **caractérisé en ce que** durant l'étape d'expansion élasto-plastique radiale de la portion supérieure (106) de la pièce (100), un contrôle continu de l'expansion est réalisé, l'étape d'expansion élasto-plastique radiale de la portion supérieure (106) de la pièce (100) étant de préférence asservie en fonction des données du contrôle continu réalisé.

5. Procédé d'assemblage selon l'une quelconque des revendications précédentes, **caractérisé en ce que** l'expansion élasto-plastique radiale de la portion supérieure (106) de la pièce (100) est localisée axialement entre l'épaulement (105) de la portée de frettage (110) de la pièce (100) et l'extrémité supérieure (101) libre.

6. Procédé d'assemblage selon l'une quelconque des revendications précédentes, **caractérisé en ce que** la cavité axiale (120) présente au moins un changement de diamètre intérieur (121) situé axialement entre l'épaulement (105) de la portée (110) cylindrique de la pièce (100) et l'extrémité supérieure (101) libre, et orientée dans le sens d'une diminution d'une épaisseur de la portée cylindrique dirigée vers l'extrémité supérieure (101) libre.

7. Procédé d'assemblage selon l'une quelconque des revendications précédentes, **caractérisé en ce que** l'étape d'expansion élasto-plastique radiale comporte l'utilisation d'un outil (200) d'expansion radiale, notamment de conversion de déplacement axial en déplacement d'expansion radiale, et de préférence une étape de mise en place d'une pluralité de segments (220) d'expansion à travers l'extrémité supérieure (101) libre et répartis autour d'un cône d'expansion (210) et une étape d'application d'un effort axial sur le cône d'expansion (210).

8. Procédé d'assemblage selon l'une quelconque des revendications précédentes, **caractérisé en ce que** l'étape de formation de cannelures (103) ouvertes sur la paroi intérieure (102), de préférence de révolution, est une étape de brochage.

9. Procédé d'assemblage selon l'une quelconque des revendications précédentes, **caractérisé en ce qu'**il comporte, après l'étape de frettage de la bague (10), une étape de formation d'une collerette (107) annulaire à partir de l'extrémité supérieure (101) libre de la pièce (100), la collerette (107) annulaire présentant une face de rétention (108) appliquée sur la face transversale supérieure (12) de la bague (10), de manière à immobiliser axialement la bague (10), en appui axial contre l'épaulement (105) de la portée (110) de la pièce (100).

10. Procédé d'assemblage selon la revendication 8, **caractérisé en ce que** l'étape de formation de la collerette (107) annulaire a pour effet une déformation locale de la portion supérieure (106) telle que la portion des cannelures (103) en recouvrement avec la portée de frettage (110) se rapproche de l'axe de référence (X).

11. Procédé d'assemblage selon la revendication 8 ou 9, **caractérisé en ce que** l'étape de formation de la collerette (107) annulaire comprend une étape de sertissage, de préférence une étape de sertissage orbital.

12. Procédé d'assemblage selon l'une quelconque des revendications précédentes, **caractérisé en ce que** la bague (10) est une bague intérieure d'un roulement et la pièce (100) est un moyeu, de préférence un moyeu de roue motrice.

## Patentansprüche

1. Verfahren zur Montage mindestens eines Rings (10), der durch Aufschrumpfen mit einem Schrumpfsitz (110) eines Teils (100) zusammenwirkt, das eine Referenzachse (X) definiert und einen durchgehenden axialen Hohlraum (120) aufweist, wobei der Schrumpfsitz (110) radial von der Referenzachse (X) abgewandt ist, wobei das Teil (100) ein freies oberes Ende (101) und eine Innenwand (102) aufweist, die sich um die Referenzachse (X) erstreckt, radial der Referenzachse (X) zugewandt ist und sich axial erstreckt, indem sie mindestens einen Teil des axialen Hohlraums (120) begrenzt, das Montageverfahren umfassend:
- einen Schritt des Ausbildens, auf der Innenwand (102), von sich axial erstreckenden Längsnuten (103);
- einen Schritt des Aufschrumpfens des Rings (10) auf den Schrumpfsitz (110) des Teils (100), sodass eine untere Querfläche (11) des Rings (10) an eine Schulter (105) des Teils (100) anliegt;
wobei das Montageverfahren **dadurch gekennzeichnet ist, dass** es nach dem Schritt der Ausbildung der Längsnuten (103) und vor dem Schritt des Aufschrumpfens des Rings (10) auf den Schrumpfsitz (110) des Teils (100) einen Schritt der radialen elastoplastischen Ausweitung eines oberen Abschnitts (106) des Teils (100) umfasst, woraus eine Ausweitung sowohl des Schrumpfsitzes (110) als auch eines Abschnitts (104) der Längsnuten (103) resultiert, wobei das spätere Aufschrumpfen des Rings (10) auf den Schrumpfsitz (110) eine Verformung des oberen Abschnitts (106) bewirkt, so dass sich der Abschnitt (104) der Längsnuten (103) der Referenzachse (X) nähert.

2. Montageverfahren nach Anspruch 1, **dadurch gekennzeichnet, dass** der Abschnitt (104) der Längsnuten (103) einen Abschnitt in mindestens teilweiser axialer Überdeckung mit dem Schrumpfsitz (110) umfasst.

3. Montageverfahren nach Anspruch 1 oder 2,
**dadurch gekennzeichnet, dass** die radiale elastoplastische Ausweitung des oberen Abschnitts (106) des Teils (100) mindestens einen zylindrischen Abschnitt des axialen Hohlraums (120), der einen vor der Ausweitung gemessenen Nenndurchmesser (Dn) aufweist, zu einem ausgeweiteten Abschnitt verformt, dessen kleinster nach der Ausweitung auf demselben zylindrischen Abschnitt gemessener Durchmesser (Ds) größer oder gleich dem vor der Ausweitung gemessenen Nenndurchmesser (Dn) des zylindrischen Abschnitts ist.

4. Montageverfahren nach einem der vorstehenden Ansprüche,
**dadurch gekennzeichnet, dass** während des Schritts der radialen elastoplastischen Ausweitung des oberen Abschnitts (106) des Teils (100) eine kontinuierliche Kontrolle der Ausweitung durchgeführt wird, wobei der Schritt der radialen elastoplastischen Ausweitung des oberen Abschnitts (106) des Teils (100) vorzugsweise in Abhängigkeit von den Daten der durchgeführten kontinuierlichen Kontrolle geregelt wird.

5. Montageverfahren nach einem der vorstehenden Ansprüche,
**dadurch gekennzeichnet, dass** die radiale elastoplastische Ausweitung des oberen Abschnitts (106) des Teils (100) axial zwischen der Schulter (105) des Schrumpfsitzes (110) des Teils (100) und dem freien oberen Ende (101) lokalisiert ist.

6. Montageverfahren nach einem der vorstehenden Ansprüche,
**dadurch gekennzeichnet, dass** der axiale Hohlraum (120) mindestens eine Änderung des Innendurchmessers (121) aufweist, die axial zwischen der Schulter (105) der zylindrischen Sitzfläche (110) des Teils (100) und dem freien oberen Ende (101) angeordnet und in Richtung einer Verringerung einer Dicke der zylindrischen Sitzfläche, die zu dem freien oberen Ende (101) gerichtet ist, ausgerichtet ist.

7. Montageverfahren nach einem der vorstehenden Ansprüche,
**dadurch gekennzeichnet, dass** der Schritt der radialen elastoplastischen Ausweitung die Verwendung eines Werkzeugs (200) für radiale Ausweitung, insbesondere für die Umwandlung einer axialen Verschiebung in eine Verschiebung der radialen Ausweitung, und vorzugsweise einen Schritt des Implementierens einer Vielzahl von Ausweitungssegmenten (220) durch das freie obere Ende (101), die um einen Ausweitungskonus herum (210) verteilt sind, und einen Schritt des Aufbringens einer axialen Kraft auf den Ausweitungskonus (210) umfasst.

8. Montageverfahren nach einem der vorstehenden Ansprüche,
**dadurch gekennzeichnet, dass** der Schritt des Ausbildens von Längsnuten (103) offen auf der Innenwand (102), vorzugsweise rotationssymmetrisch, ein Schritt des Räumens ist.

9. Montageverfahren nach einem der vorstehenden Ansprüche,
**dadurch gekennzeichnet, dass** es nach dem Schritt des Aufschrumpfens des Rings (10) einen Schritt des Ausbildens eines ringförmigen Kragens (107) ausgehend von dem freien oberen Ende (101) des Teils (100) umfasst, wobei der ringförmige Kragen (107) eine Rückhaltefläche (108) aufweist, die an der oberen Querfläche (12) des Rings (10) so anliegt, um den Ring (10) in axialer Anlage gegen die Schulter (105) der Sitzfläche (110) des Teils (100) axial zu arretieren.

10. Montageverfahren nach Anspruch 8, **dadurch gekennzeichnet, dass** der Schritt des Ausbildens des ringförmigen Kragens (107) eine lokale Verformung des oberen Abschnitts (106) bewirkt, so dass sich der Abschnitt der Längsnuten (103) in Überdeckung mit dem Schrumpfsitz (110) der Referenzachse (X) nähert.

11. Montageverfahren nach Anspruch 8 oder 9, **dadurch gekennzeichnet, dass** der Schritt des Ausbildens des ringförmigen Kragens (107) einen Schritt des Bördelns, vorzugsweise einen Schritt des orbitalen Bördelns, umfasst.

12. Montageverfahren nach einem der vorstehenden Ansprüche,
**dadurch gekennzeichnet, dass** der Ring (10) ein Innenring eines Lagers ist und das Teil (100) eine Nabe ist, vorzugsweise eine Antriebsradnabe.

## Claims

1. Method for assembling at least one ring (10) cooperating by shrinking with a shrink-fitting surface (110) of a part (100) defining a reference axis (x) and having a through axial cavity (120), the shrink-fitting surface (110) being turned radially away from the reference axis (x), the part (100) having a free upper end (101) and an inner wall (102) extending around the reference axis (x) turned radially toward the reference axis (x) and extending axially while delimiting at least part of the axial cavity (120), the assembly method comprising:
- a step of forming, on the inner wall (102), splines (103) extending axially;
- a step for shrinking the ring (10) on the shrink-fitting surface (110) of the part (100) so that a lower transverse face (11) of the ring (10) comes into abutment against a shoulder (105) of the part (100);
the assembly method being **characterized in that** it comprises, after the step of forming the splines (103) and prior to the step of shrinking the ring (10) onto the shrink-fitting surface (110) of the part (100), a step of radial elastoplastic expansion of an upper portion (106) of the part (100), which results in a widening of the shrink-fitting surface (110) and of a portion (104) of the splines (103), the subsequent shrinking of the ring (10) on the shrink-fitting surface (110) causing a deformation of the upper portion (106) such that said portion (104) of the splines (103) approaches the reference axis (x).

2. Assembly method according to claim 1, **characterized in that** the portion (104) of the splines (103) comprises a portion in at least partial axial overlap with the shrink-fitting surface (110).

3. Assembly method according to claim 1 or 2, **characterized in that** the radial elastoplastic expansion of the upper portion (106) of the part (100) deforms at least one cylindrical portion of the axial cavity (120) having a nominal diameter (dn) taken before expansion into a flared portion whereof a smaller diameter (ds) taken after expansion on the same cylindrical portion is greater than or equal to the nominal diameter (dn) of said cylindrical portion taken before expansion.

4. Assembly method according to one of the preceding claims, **characterized in that** during the step of radial elastoplastic expansion of the upper portion (106) of the part (100), a continuous control of the expansion is carried out, the step of radial elastoplastic expansion of the upper portion (106) of the part (100) preferably being controlled according to the data of the continuous control carried out.

5. Assembly method according to one of the preceding claims, **characterized in that** the radial elastoplastic expansion of the upper portion (106) of the part (100) is located axially between the shoulder (105) of the shrink-fitting surface (110) of the part (100) and the free upper end (101).

6. Assembly method according to one of the preceding claims, **characterized in that** the axial cavity (120) has at least one change in internal diameter (121) located axially between the shoulder (105) of the cylindrical bearing surface (110) of the part (100) and the free upper end (101), and oriented in the direction of a reduction in thickness of the cylindrical bearing surface directed toward the free upper end (101).

7. Assembly method according to one of the preceding claims, **characterized in that** the radial elastoplastic expansion step comprises using a radial expansion tool (200), in particular for converting axial displacement into radial expansion displacement, and preferably a step for placing a plurality of expansion segments (220) through the free upper end (101) and distributed around an expansion cone (210), and a step of applying an axial force to the expansion cone (210).

8. Assembly method according to one of the preceding claims, **characterized in that** the step of forming splines (103) open on the inner wall (102), preferably of revolution, is a broaching step.

9. Assembly method according to one of the preceding claims, **characterized in that** it comprises, after the step of shrinking the ring (10), a step of forming an annular flange (107) from the free upper end (101) of the part (100), the annular flange (107) having a retention face (108) applied to the upper transverse face (12) of the ring (10), so as to immobilize the ring (10) axially, in axial support against the shoulder (105) of the bearing surface (110) of the part (100).

10. Assembly method according to claim 8, **characterized in that** the step of forming the annular flange (107) results in a local deformation of the upper portion (106) such that the portion of the splines (103) overlapping with the shrink-fitting surface (110) approaches the reference axis (x).

11. Assembly method according to claim 8 or 9, **characterized in that** the step of forming the annular flange (107) comprises a crimping step, preferably an orbital crimping step.

12. Assembly method according to one of the preceding claims, **characterized in that** the ring (10) is an inner ring of a bearing and the part (100) is a hub, preferably a driving wheel hub.
